# FASCICULE DE BREVET EUROPEEN

(11) **EP 2 334 554 B1**
(45) Date de publication et mention de la délivrance du brevet: **18.01.2012**
(21) Numéro de dépôt: 09748398.6
(22) Date de dépôt: 16.09.2009
(51) Int. Cl.: B64D 27/14, B64D 27/20, B64D 27/26

(54) **PARTIE ARRIERE D'AERONEF COMPRENANT UNE STRUCTURE DE SUPPORT DE MOTEURS RELIEE AU FUSELAGE PAR AU MOINS UN ELEMENT DE BLOCAGE SOLLICITE EN COMPRESSION**
DURCH MINDESTENS EIN SPERRELEMENT UNTER DRUCKBELASTUNG MIT DEM RUMPF VERBUNDENES HECKTEIL EINES FLUGZEUGS MIT EINER STRUKTUR ZUR ABSTÜTZUNG VON TRIEBWERKEN
REAR PART OF AN AIRCRAFT COMPRISING A STRUCTURE FOR SUPPORTING ENGINES, CONNECTED TO THE FUSELAGE BY AT LEAST ONE BLOCKING ELEMENT UNDER COMPRESSION LOADING

(30) Priorité: 18.09.2008 FR 0856300
(43) Date de publication de la demande: 22.06.2011
(73) Titulaire: Airbus Operations (Société par actions simplifiée), 31060 Toulouse (FR)
(72) Inventeur: LAFONT, Laurent, F-31320 Pechbusque (FR); JOURNADE, Frédéric, F-31100 Toulouse (FR)
(74) Mandataire: Ilgart, Jean-Christophe
(86) Numéro de dépôt international: PCT/FR2009/051741
(87) Numéro de publication internationale: WO 2010/031960

(56) Documents cités:
- EP-A- 0 311 155
- WO-A-2007/144377
- GB-A- 724 052

## Description

### DOMAINE TECHNIQUE

La présente invention se rapporte de façon générale à une partie arrière d'aéronef, équipée de moteurs rapportés sur son fuselage. Une telle partie arrière est connue notamment des documents GB 724 052, EP-A-0 311 155 et WO 2007/144377A.

### ÉTAT DE LA TECHNIQUE ANTÉRIEURE

Pour réaliser une telle partie arrière d'aéronef, il a été proposé, dans l'art antérieur, d'interposer un mât d'accrochage entre le fuselage et chaque moteur. Dans cette configuration, le mât est directement fixé sur le fuselage. Pour assurer de manière satisfaisante le transfert des efforts moteurs vers le fuselage, un dimensionnement important s'avère nécessaire à la fois pour ce mât, pour la partie du fuselage le supportant, ainsi que pour les moyens de fixation interposés entre ces éléments. Cela se traduit par de la traînée, pénalisant les performances aérodynamiques globales de l'aéronef.

Une autre solution consiste à prévoir une structure de support des moteurs traversant le fuselage, ainsi que l'espace intérieur de l'aéronef défini par ce fuselage. Au niveau de son passage à travers les deux ouvertures de fuselage, la structure traversante est éclissée au fuselage à l'aide d'une pluralité de boulons ou organes de fixation similaires, formant tout ou partie des moyens d'attache interposés entre les encadrements d'ouvertures et la structure de support.

Néanmoins, la mise en place de ces moyens d'attache reste délicate, en particulier en raison des problèmes d'accessibilité pour les opérateurs réalisant une telle tâche. De plus, ils sont souvent de masse et de coûts importants, en plus d'être habituellement sensibles aux sollicitations en fatigue, ce qui réduit significativement leur durée de vie.

### EXPOSÉ DE L'INVENTION

L'invention a donc pour but de proposer une partie arrière d'aéronef remédiant au moins partiellement à l'inconvénient mentionné ci-dessus, relatif aux réalisations de l'art antérieur.

Pour ce faire, l'invention a pour objet une partie arrière d'aéronef comprenant :
- un fuselage délimitant un espace intérieur de l'aéronef ;
- au moins deux moteurs ;
- une structure de support des moteurs, traversant ledit fuselage au niveau d'une première et d'une seconde ouvertures pratiquées dans celui-ci et réparties de part et d'autre d'un plan médian vertical de l'aéronef, ladite structure de support présentant une première et une seconde extrémités opposées ;
- chacune desdites première et seconde extrémités opposées de la structure de support faisant saillie extérieurement du fuselage, respectivement de part et d'autre dudit plan médian vertical, et portant l'un desdits moteurs ; et
- des moyens d'attache raccordant ladite structure de support au fuselage, comprenant des premiers moyens d'attache raccordant ladite structure à un premier encadrement formant ladite première ouverture de fuselage et des seconds moyens d'attache raccordant ladite structure à un second encadrement formant ladite seconde ouverture de fuselage.

Selon l'invention, lesdits premiers moyens d'attache comprennent au moins un élément de blocage de ladite structure de support, sollicité en compression en étant en appui d'une part sur ledit premier encadrement, et d'autre part sur ladite structure de support, et lesdits seconds moyens d'attache comprennent au moins un élément de blocage de ladite structure de support, sollicité en compression en étant en appui d'une part sur ledit second encadrement, et d'autre part sur ladite structure de support.

Ainsi, l'invention propose une conception originale dans laquelle les premiers et seconds moyens d'attache sont au moins partiellement constitués à l'aide d'éléments de blocage qui travaillent en compression, et non plus en traction comme cela était le cas pour les éléments conventionnels de l'art antérieur, du type boulons ou similaires. D'ailleurs, il est préférentiellement fait en sorte que les premiers et seconds moyens d'attache, assurant à eux seuls le raccordement de la structure dans le premier encadrement et le second encadrement, respectivement, soient entièrement dépourvus de tels boulons et de tout autre moyen similaire de fixation travaillant en traction.

Il en résulte avantageusement une facilité de mise en place de ces éléments de blocage, car ces derniers peuvent se situer entièrement dans les ouvertures de fuselage, sans avoir à traverser les encadrements ni la structure de support des moteurs. De plus, ces éléments de blocage peuvent être de masse et de coûts réduits, et restent surtout peu ou pas sensibles aux sollicitations en fatigue, leur assurant une durée de vie accrue par rapport à celle des moyens d'attache rencontrés antérieurement.

De préférence, chacun desdits premiers et seconds moyens d'attache comprend au moins deux éléments de blocage de ladite structure de support, sollicités en compression respectivement selon deux directions distinctes, par exemple sensiblement orthogonales entre elles.

D'une manière générale, chaque élément de blocage sollicité en compression exerce un effort sur une face donnée de la structure, qui conduit la face opposée à cette face donnée, à venir en appui sur la face de l'encadrement lui étant en regard. Ainsi, pour chaque ouverture, lorsqu'il est prévu des éléments de blocage sollicités en compression respectivement selon deux directions distinctes, inscrites dans le plan médian d'ouverture, cela suffit à maintenir la structure par rapport à l'encadrement d'ouverture, dans toutes les directions de ce plan médian de l'ouverture de fuselage.

Il est noté que l'appui entre l'encadrement et ladite face opposée de la structure de support peut être avec ou sans contact direct, des moyens d'amortissement pouvant par exemple être interposés entre ces deux éléments, comme cela sera précisé ci-dessous.

En effet, préférentiellement, chaque élément de blocage est en appui sur ladite structure de support et/ou sur son encadrement associé, via un organe d'amortissement. Cela permet avantageusement de procurer une certaine souplesse aux premiers et seconds moyens d'attache, réduisant les vibrations dans le fuselage. En d'autres termes, les organes d'amortissement, préférentiellement en matériau polymère à déformation élastique, par exemple du type en élastomère ou caoutchouc, permettent avantageusement d'amortir les vibrations, et participent donc à isoler, d'un point de vue vibratoire, le fuselage vis-à-vis du moteur. De plus, le faible niveau d'effort rencontré, ainsi que la température environnante peu élevée en raison de l'éloignement du moteur, constituent deux critères favorables à la mise en place de tels organes d'amortissement. Enfin, la présence de ces organes d'amortissement permet d'éliminer, lors des opérations de montage, les problèmes potentiels de tolérances inhérents à l'hyperstaticité de l'assemblage, lorsqu'une telle hyperstaticité est prévue.

Alternativement, d'autres organes d'amortissement du type ressort peuvent être employés.

De préférence, chaque élément de blocage présente des moyens de réglage de l'écartement entre ses deux surfaces d'appui respectivement en appui sur la structure de support et sur l'encadrement concerné. Cette fonctionnalité permet non seulement de faciliter la mise en place de ces éléments de blocage dans l'ouverture, mais également de leur appliquer une précontrainte en compression d'une valeur souhaitée.

De préférence, chaque élément de blocage prend la forme d'une tige de compression portant deux surfaces d'appui opposées.

De préférence, chacun desdits premiers et seconds moyens d'attache comprend des éléments de blocage en appui sur au moins deux faces de ladite structure de support, ainsi qu'au moins un organe d'amortissement secondaire interposé entre une autre face de ladite structure de support, et ledit encadrement concerné. De préférence, chaque organe d'amortissement secondaire est de nature identique ou similaire à celle des organes d'amortissement décrits ci-dessus, destinés à équiper les éléments de blocage.

Encore plus préférentiellement, ladite structure de support et lesdits premier et second encadrements présentent chacun quatre faces formant sensiblement un quadrilatère en section selon le plan médian d'ouverture associé, chacun desdits premiers et seconds moyens d'attache comprend des éléments de blocage en appui sur deux faces jointives de ladite structure de support, ainsi que des organes d'amortissement secondaires interposés entre les deux autres faces jointives de ladite structure de support, et ledit encadrement concerné.

Les organes d'amortissement secondaires font qu'il n'existe pas de contact direct entre la structure de support et les encadrements, même si de tels contacts directs pourraient être envisagés, sans sortir du cadre de l'invention. Lorsque de tels organes d'amortissement et organes d'amortissement secondaires ne sont pas prévus, il est alors obtenu un assemblage dit rigide entre la structure de support et les encadrements.

En outre, dans le cas contraire préféré où des organes d'amortissement et des organes d'amortissement secondaires sont prévus, il est de préférence fait en sorte que certains ou chacun de ces organes puisse se comprimer seulement sur une course d'écrasement limitée, au-delà de laquelle un contact rigide entre la structure et l'encadrement interdit la poursuite de l'écrasement.

Toujours de manière préférentielle, lesdits moyens d'attache comprennent également au moins une bielle de reprise d'efforts dont une première extrémité est montée sur ladite structure de support, et dont l'extrémité opposée est montée sur le fuselage, à distance des première et seconde ouvertures.

Ainsi, cela permet avantageusement de minimiser l'intensité des efforts transitant par les encadrements d'ouvertures de fuselage, permettant à ces derniers de présenter un dimensionnement moins conséquent que celui rencontré antérieurement. En effet, une partie des efforts provenant du moteur et se dirigeant vers le fuselage n'emprunte plus les encadrements d'ouverture du fuselage, mais transite par la ou les bielles spécifiques à la présente invention, dont le but premier est donc d'introduire des efforts moteurs en des points du fuselage distants des ouvertures. La concentration de contraintes au sein des encadrements d'ouvertures du fuselage est donc sensiblement minimisée.

D'autre part, pour minimiser la concentration de contraintes au sein de la structure de support des moteurs, au droit des ouvertures de fuselage, il est préférentiellement fait en sorte que la première extrémité de bielle soit également montée sur cette structure de support, à distance des ouvertures. La structure moins sollicitée localement peut ainsi présenter un dimensionnement moins important, pour un gain de masse non négligeable.

De préférence, ladite bielle de reprise d'efforts est inclinée par rapport à une direction verticale de l'aéronef, en vue selon une direction longitudinale de ce dernier. Cela lui permet de transférer des efforts selon une direction dont une composante au moins est orientée selon la direction transversale de l'aéronef. Ces efforts transversaux s'avèrent effectivement les plus difficiles à reprendre avec les premiers et seconds moyens d'attache logés dans les ouvertures de fuselage, de sorte que l'orientation précitée de ladite bielle répond à une réelle problématique.

De préférence, ladite structure de support est réalisée à partir d'une première et d'une seconde demi-structures traversant respectivement lesdites première et seconde ouvertures du fuselage, lesdites première et seconde demi-structures étant assemblées l'une à l'autre de manière démontable au sein dudit espace intérieur.

Ainsi, cela permet de grandement faciliter les opérations de montage et de démontage de la structure de support des moteurs, puisque celle-ci est à présent réalisée à partir de deux demi-structures distinctes, assemblées l'une à l'autre de manière réversible. Chacune de ces deux demi-structures peut ainsi être manipulée indépendamment de l'autre lors d'un montage/démontage, rendant le travail plus aisé pour les opérateurs. En particulier, chaque demi-structure de support ne nécessite donc de traverser qu'une seule ouverture de fuselage, impliquant avantageusement une simplification notable pour les opérateurs, aussi bien lors du montage initial que lors d'un remplacement de la structure de support.

De plus, lors d'une opération de montage, chaque demi-structure peut être équipée, à son extrémité, de son moteur, avant d'être insérée dans son ouverture de fuselage correspondante, pour ensuite être assemblée à l'autre demi-structure. Cela simplifie encore davantage le procédé de montage par rapport à celui mis en oeuvre antérieurement avec la solution à structure unique, puisqu'avec cette dernière, le montage des moteurs sur cette structure était possible seulement après la mise en place de cette structure sur le fuselage.

Naturellement, ce dernier avantage est également observé lors d'une opération de démontage de la structure de support des moteurs, étant donné que chaque moteur peut être déposé en restant rattaché à sa demi-structure de support associée.

Enfin, un autre avantage découlant de la réalisation en deux demi-structures réside dans la possibilité de les incliner l'une par rapport à l'autre, lorsqu'elles sont regardées en vue de face, en particulier de façon à ce qu'elles forment un V.

Néanmoins, une structure de support traversante, réalisée d'un seul tenant et traversant les deux ouvertures de fuselage, peut être envisagée sans sortir du cadre de l'invention.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en perspective d'une partie arrière d'aéronef, selon un mode de réalisation préféré de la présente invention ;
- la figure 2 représente une vue plus détaillée en coupe transversale de la partie arrière d'aéronef montrée sur la figure 1, les moyens d'attache de la structure de support des moteurs sur le fuselage ayant volontairement été omis ;
- la figure 2a schématise le procédé d'assemblage de la partie arrière montrée sur les figures précédentes ;
- la figure 3 représente une vue similaire à celle de la figure 2, sur laquelle ont été représentés des premiers et seconds moyens d'attache de la structure de support des moteurs sur les encadrements formant les ouvertures de fuselage, cette figure correspondant également à une vue en coupe prise le long de la ligne verticale III-III de la figure 4 ;
- la figure 3a représente une première variante de la configuration montrée sur la figure 3 ;
- la figure 3b représente une seconde variante de la configuration montrée sur la figure 3 ;
- la figure 4 représente une vue en coupe selon la ligne verticale IV-IV de la figure 3 ;
- la figure 5 représente une vue en coupe schématisant l'un des éléments de blocage appartenant aux premiers moyens d'attache montrés sur les figures 3 et 4 ; et
- la figure 6 représente une vue en coupe schématisant l'un des organes d'amortissement secondaires appartenant aux premiers moyens d'attache montrés sur les figures 3 et 4 ;
- la figure 7 représente une vue similaire à celle de la figure 3, sur laquelle la structure de support des moteurs est réalisée selon une forme alternative ;
- la figure 8 représente une vue en coupe schématisant un élément de blocage selon un autre mode de réalisation préféré, destiné à équiper les premiers et seconds moyens d'attache ; et
- la figure 9 représente une vue schématique partielle de dessous de la partie arrière d'aéronef, incorporant des éléments de blocage du type de celui montré sur la figure 8.

### EXPOSÉ DÉTAILLÉ DE MODES DE RÉALISATION PARTICULIERS

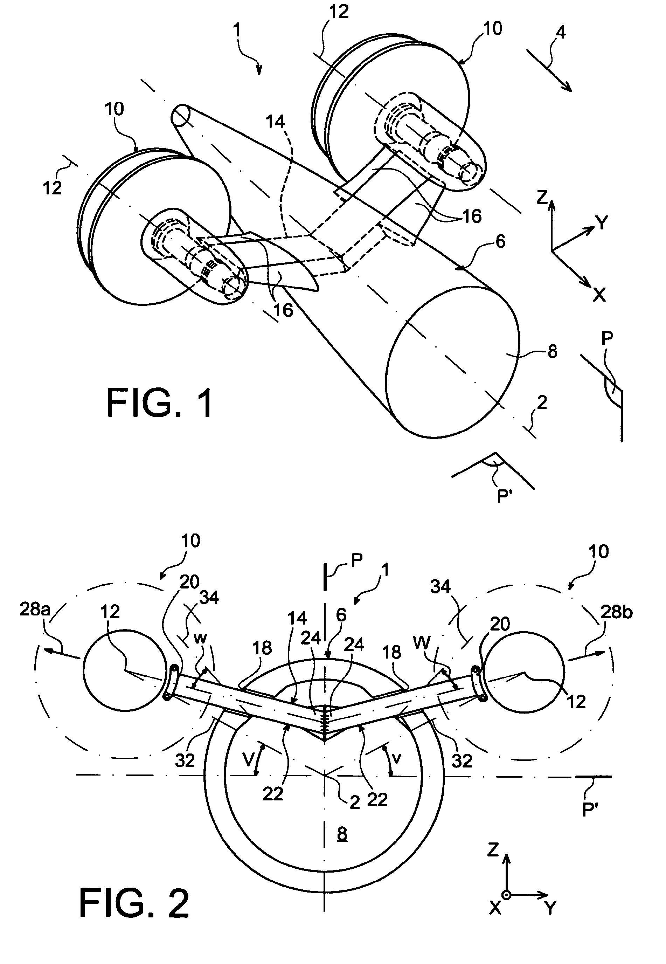

En référence à la figure 1, on voit une partie arrière 1 d'aéronef se présentant sous la forme d'un mode de réalisation préféré de la présente invention.

Dans toute la description qui va suivre, par convention, on appelle X la direction longitudinale de l'aéronef, qui est parallèle à un axe longitudinal 2 de cet aéronef. D'autre part, on appelle Y la direction orientée transversalement par rapport à l'aéronef, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par les moteurs, cette direction étant représentée schématiquement par la flèche 4.

Globalement, la partie arrière 1 comprend un fuselage 6, de section transversale sensiblement circulaire, elliptique ou similaire, de centre passant par l'axe longitudinal 2, et délimitant un espace intérieur de l'aéronef 8.

De plus, il comprend au moins deux moteurs 10 disposés de part et d'autre d'un plan médian vertical P passant par l'axe 2. Dans le mode de réalisation préféré, il est prévu deux moteurs 10, un de chaque côté du fuselage 6, ces moteurs pouvant indifféremment être du type turboréacteur, turbopropulseur, ou autre. Chacun d'eux présente un axe longitudinal 12 sensiblement parallèle à la direction X.

Pour assurer la suspension de ces moteurs, il est prévu une structure de support 14, de préférence agencée dans un plan transversal, et qui a la particularité de traverser l'espace intérieur 8 ainsi que le fuselage au niveau de deux ouvertures de celui-ci. Les portions de cette structure 14 qui sont éloignées latéralement du plan P, et qui font saillie extérieurement du fuselage, sont habillées par des carénages aérodynamiques 16, comme visible sur la figure 1.

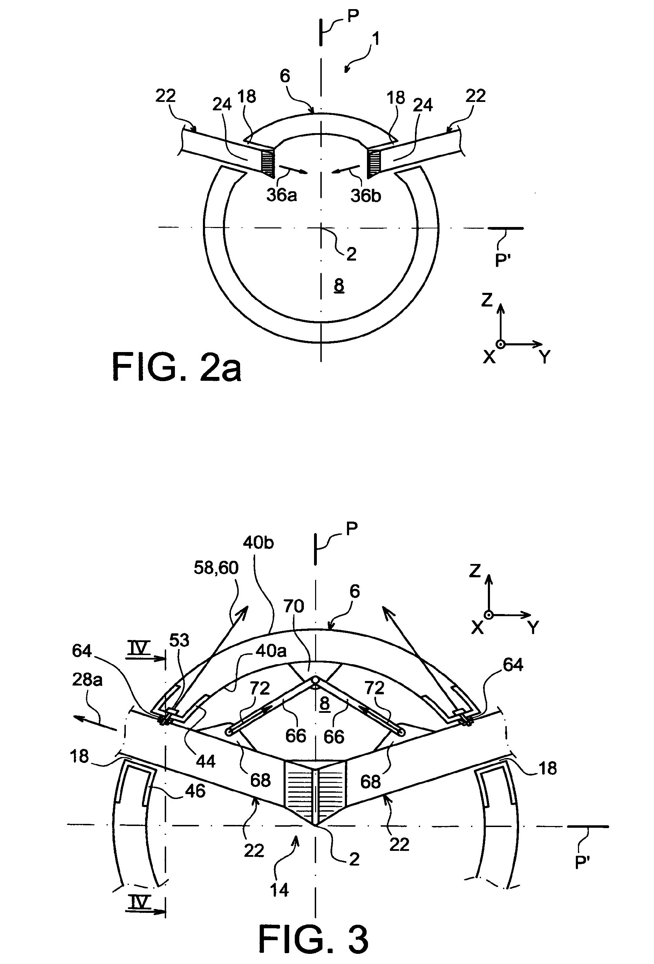

Plus précisément, en référence à la figure 2, on peut apercevoir que la structure de support 14 traverse le fuselage 6 au niveau d'une première et d'une seconde ouvertures pratiquées dans celui-ci, toutes les deux référencées 18. Ces deux ouvertures 18 sont réparties de part et d'autre du plan médian vertical P, et disposées de manière symétrique par rapport à ce dernier, qui constitue par ailleurs sensiblement un plan de symétrie pour l'ensemble de la partie arrière de l'aéronef.

La structure de support 14 présente une première et une seconde extrémités opposées, toutes les deux référencées 20, chacune faisant saillie extérieurement du fuselage, respectivement de part et d'autre du plan P, et portant l'un des moteurs 10.

Chaque extrémité 20 peut ainsi être assimilée à une structure rigide de mât d'accrochage 4, par exemple de conception identique ou similaire à celles connues de l'art antérieur pour suspendre un moteur sous une voilure, et assurant donc le transfert des efforts moteurs vers la structure de l'aéronef.

Dans ce mode préféré, la structure de support 14 des moteurs est réalisée à partir d'une première et d'une seconde demi-structures, toutes les deux référencées 22, et traversant respectivement les première et seconde ouvertures du fuselage 18, 18.

De plus, elles sont assemblées l'une à l'autre de manière démontable au sein de l'espace intérieur 8. Pour ce faire, la première demi-structure 22 présente une extrémité intérieure 24 opposée à la première extrémité 20, et la seconde demi-structure 22 présente une autre extrémité intérieure 24 opposée à la seconde extrémité 20, les deux extrémités intérieure 24, 24 étant donc en contact et assemblées entre elles de manière démontable au sein de l'espace intérieur 8, grâce par exemple à des boulons et/ou des pions de cisaillement (non représentés).

De préférence, la jonction entre les deux demi-structures 22, 22 s'effectue au niveau du plan P dans lequel se trouve l'interface de fixation, les boulons et/ou les pions étant de ce fait traversés par le plan P. D'une manière générale, ce plan P constitue un plan de symétrie pour la structure de support des moteurs 14, qui, en vue de face telle que celle montrée sur la figure 2, forme sensiblement un V.

En effet, la première demi-structure 22, considérée comme celle de gauche sur cette figure 2, est inclinée par rapport à la direction Y en allant vers le haut en s'écartant du plan P, de même que la seconde demi-structure 22, considérée comme celle de droite sur cette figure 2, est également inclinée par rapport à la direction Y en allant vers le haut en s'écartant du plan P. La première demi-structure 22 s'étend donc selon une première direction 28a inclinée par rapport aux directions Y et Z dans un plan transversal, alors que la seconde demi-structure 22 s'étend selon une seconde direction 28b également inclinée par rapport aux directions Y et Z dans le même plan transversal.

Chaque demi-structure 22, 22 prend la forme d'une poutre ou d'un caisson s'étendant de manière sensiblement rectiligne dans sa direction associée 28a, 28b, de son extrémité intérieure 24 agencée dans le plan P, jusqu'à son extrémité opposée 20, 20 portant l'un des moteurs 10.

Dans le mode de réalisation préféré, le V formé par la structure 14 s'ouvre vers le haut, et sa pointe est agencée au-dessus de l'axe longitudinal 2. La liberté de positionnement de la pointe du V ainsi que la liberté de fixation de la valeur de l'angle de ce V permettent de s'adapter au mieux aux différentes contraintes existantes, et en particulier permettent de faire en sorte de limiter au mieux les perturbations aérodynamiques rencontrées au niveau des portions extérieures des demi-structures 22, 22.

En effet, la structure de support est conçue de sorte qu'en vue de face, pour chaque demi-structure :
- un angle aigu (v) entre un plan médian horizontal du fuselage P', et une droite 32 reliant l'axe 2 du fuselage et l'axe longitudinal 12 du moteur, est supérieur à 25° ; et
- un angle aigu (w) entre la direction 28a, 28b selon laquelle s'étend ladite demi-structure, et la direction 34 normale au fuselage au niveau du passage de cette demi-structure, est inférieur à 20°.

Cette valeur relativement importante de l'angle (v) permet de disposer les moteurs à la hauteur souhaitée par rapport au fuselage, avec par exemple les axes moteurs 12 situés dans un plan horizontal proche d'une extrémité haute du fuselage, tandis que la valeur relativement faible de l'angle (w), traduisant un écartement entre le fuselage et chaque demi-structure, permet de s'affranchir de la présence d'un carénage aérodynamique additionnel.

La conception décrite ci-dessus permet un montage et un démontage aisés de la structure de support 14. En effet, en référence à la figure 2a schématisant un procédé d'assemblage de la partie arrière d'aéronef 1, on peut apercevoir que ce procédé comporte l'étape de mise en place de la première demi-structure 22, par déplacement de celle-ci visant à lui faire traverser la première ouverture de fuselage 18 avec son extrémité intérieure 24 placée vers l'avant dans le sens de déplacement 36a, correspondant par exemple à la première direction 28a dans laquelle s'étend cette première demi-structure une fois installée.

Simultanément ou successivement, il est mis en oeuvre une étape de mise en place de la seconde demi-structure 22, par déplacement de celle-ci visant à lui faire traverser la seconde ouverture de fuselage 18 avec son extrémité intérieure 24 placée vers l'avant dans le sens de déplacement 36b, correspondant par exemple à la seconde direction 28b dans laquelle s'étend cette seconde demi-structure une fois installée.

Lors de chacune de ces deux étapes, le moteur 10 peut déjà être installé sur l'extrémité extérieure 20 (non représentée sur la figure 2a), afin de simplifier et d'écourter le procédé d'assemblage.

De plus, il est fait en sorte que les extrémités intérieures 24, 24 soient dimensionnées pour passer à travers leurs ouvertures de fuselage respectives 18, 18, de préférence même en étant équipées de leurs moyens de renfort dédiés à l'assemblage des deux demi-structures, tels que des nervures ou similaires. Alternativement, ces moyens de renfort peuvent être montés sur les extrémités intérieures 24, 24 seulement après que celles-ci aient traversé les ouvertures 18, 18.

D'une manière générale, il est prévu que dans un plan médian d'ouverture, le rapport entre la hauteur de l'ouverture et la hauteur d'une demi-structure, soit compris entre 1,3 et 2. En outre, dans ce même plan, le rapport entre la profondeur de l'ouverture et la profondeur d'une demi-structure, selon la direction X, est compris entre 1,1 et 1,5.

Ensuite, il est procédé à l'assemblage de l'extrémité intérieure 24 de la première demi-structure 22 sur l'extrémité intérieure 24 de ladite seconde demi-structure 22, à l'aide des moyens de liaison précités, qui sont de préférence orientés selon la direction Y.

Des moyens d'attache sont prévus entre le fuselage et la structure de support des moteurs.

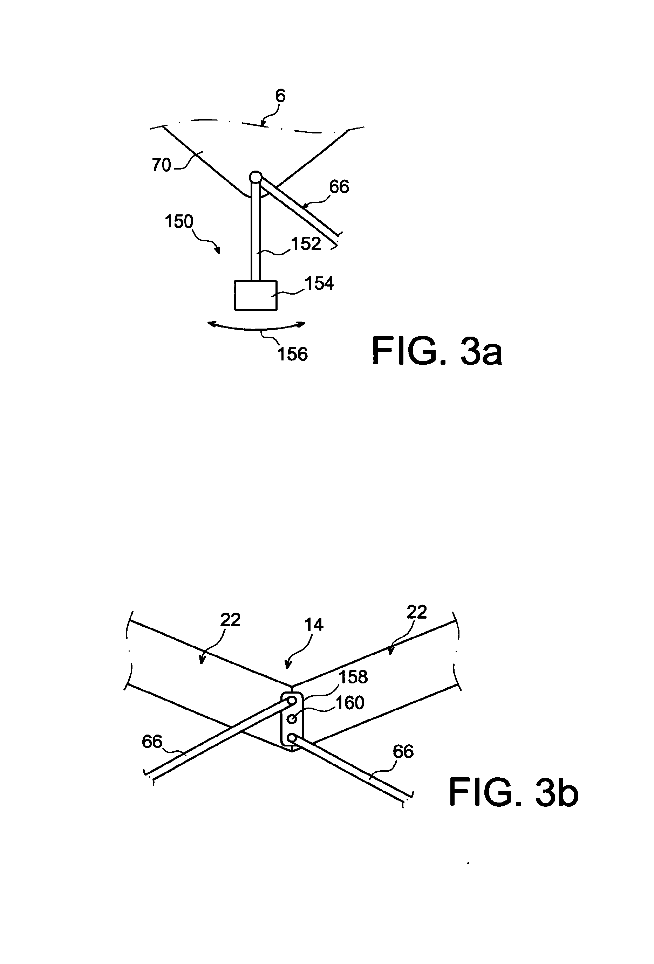

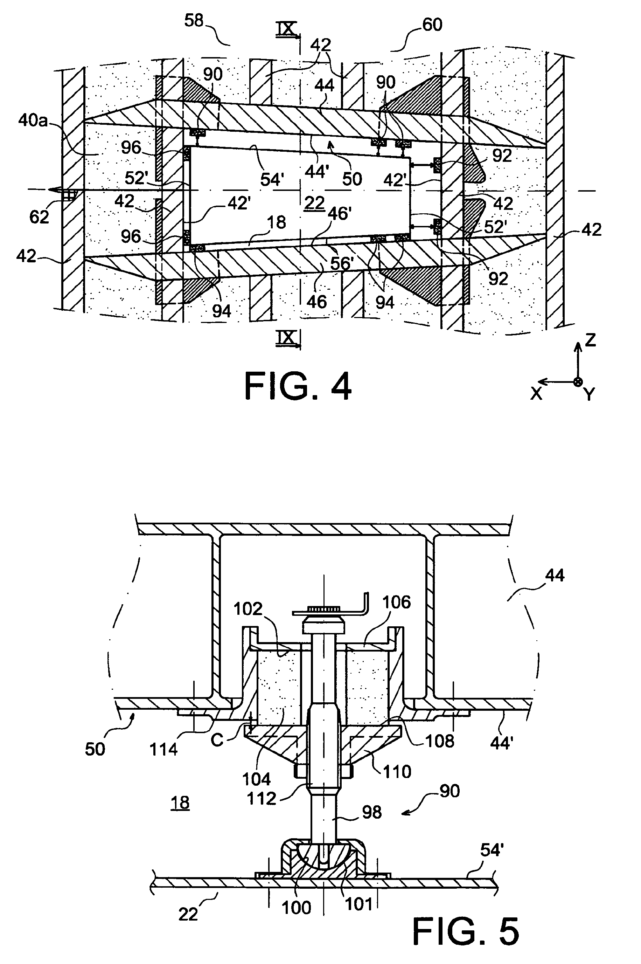

Une forme de réalisation préférée est montrée sur les figures 3 et 4.

Ces moyens comprennent tout d'abord des premiers moyens d'attache raccordant la première demi-structure à un premier encadrement formant la première ouverture de fuselage, ainsi que des seconds moyens d'attache raccordant la seconde demi-structure à un second encadrement formant la seconde ouverture de fuselage. Les premiers et seconds moyens d'attache étant de conception sensiblement identique, et symétriques par rapport au plan P, seuls les premiers moyens seront décrits ci-après.

Tout d'abord, il est noté que la première ouverture 18, de conception identique ou similaire à celle de la seconde ouverture 18, est réalisée à l'aide d'un passage dans la peau intérieure de fuselage 40a, et d'un autre passage en regard, dans la peau extérieure de fuselage 40b. Ces deux passages forment respectivement l'entrée de l'ouverture 18, et la sortie de cette même ouverture.

L'ouverture est délimitée vers l'avant par un cadre de fuselage avant 42, et vers l'arrière par un autre cadre de fuselage arrière 42. Comme visible sur la figure 4, d'autres cadres de fuselage 42 situés entre les deux précités peuvent être tronçonnés en vue de faire apparaître l'ouverture 18. Par ailleurs, l'ouverture est délimitée vers le haut par une traverse supérieure de fermeture 44, qui s'étend de préférence selon la direction X sur toute l'épaisseur du fuselage, et qui relie les deux cadres de fuselage avant et arrière 42, 42. De la même manière, l'ouverture 18 est délimitée vers le bas par une traverse inférieure de fermeture 46, qui s'étend de préférence selon la direction X sur toute l'épaisseur du fuselage, et qui relie les deux cadres de fuselage avant et arrière 42, 42. Les quatre éléments 42, 42, 44, 46 forment ensemble le premier encadrement 50 définissant l'ouverture 18.

Ainsi, dans le plan vertical défini par la ligne IV-IV de la figure 3, tout comme dans le plan médian d'ouverture, assimilable au plan orthogonal à la demi-structure 22 et traversant l'ouverture sensiblement en son milieu entre son entrée et sa sortie, l'encadrement 50 présente la forme d'un quadrilatère à l'aide de ses quatre faces 42', 42', 44', 46' définies respectivement par les éléments précités 42, 42, 44, 46. Dans ces mêmes plans, les quatre faces de la demi-structure 22 forment également un quadrilatère, avec les faces de la demi-structure et de l'ouverture étant en regard deux à deux. Par conséquent, la face avant 52' de la demi-structure est en regard de la face avant 42' de l'encadrement, la face arrière 52' de la demi-structure est en regard de la face arrière 42' de l'encadrement, la face supérieure 54' de la demi-structure est en regard de la face supérieure 44' de l'encadrement, et la face inférieure 56' de la demi-structure est en regard de la face inférieure 46' de l'encadrement.

Les premiers moyens d'attache, assurant le montage de la première demi-structure 22 sur le premier encadrement 50, comprennent au moins un élément de blocage de la structure de support, sollicité en compression en étant en appui d'une part sur le premier encadrement 50, et d'autre part sur la demi-structure de support 22. Dans cette configuration spécifique à la présente invention, les premiers moyens d'attache sont au moins partiellement constitués à l'aide d'éléments de blocage qui travaillent en compression, et non plus en traction comme cela était le cas pour les éléments conventionnels de l'art antérieur, du type boulons ou similaires. Il en résulte une facilité de mise en place de ces éléments de blocage, car ces derniers peuvent se situer entièrement dans les ouvertures de fuselage 18, sans avoir à traverser les encadrements 50 ni la demi-structure de support 22.

D'une manière générale, chaque élément de blocage, référencé 90, 92, est sollicité en compression de manière à exercer un effort sur une face donnée de la structure, qui conduit la face opposée à cette face donnée, à venir en appui avec ou sans contact sur la face de l'encadrement lui étant en regard. Ainsi, dans le mode représenté, il est prévu des éléments de blocage 90, 92 sollicités en compression respectivement selon deux directions distinctes, inscrites dans le plan médian d'ouverture, cela suffisant à maintenir la demi-structure 22 par rapport à l'encadrement 50 dans toutes les directions de ce plan médian de l'ouverture de fuselage.

Plus précisément, les premiers moyens d'attache comprennent des éléments de blocage 90 représentés schématiquement sur les figures 4 et 5, ces éléments 90 sollicités en compression étant en appui sur la face supérieure 54' de la demi-structure, et sur la face supérieure 44' de l'encadrement. Ainsi, un ou plusieurs de ces éléments 90 disposés en rangées sont prévus à deux ou plusieurs emplacements différents de la demi-structure 22, espacés selon la direction X. Cela permet d'assurer la reprise des efforts selon la direction orthogonale à la direction 28a, dans des plans YZ. En d'autres termes, ces éléments de blocage 90 permettent la reprise des efforts dans le plan médian d'ouverture ou dans un plan parallèle à celui-ci.

De manière analogue, les premiers moyens d'attache comprennent des éléments de blocage 92 représentés schématiquement sur la figure 4, ces éléments 92 sollicités en compression étant en appui entre la face arrière 52' de la demi-structure, et la face arrière 42' de l'encadrement. Ainsi, un ou plusieurs de ces éléments 92 disposés en rangées sont prévus à deux ou plusieurs emplacements différents de la demi-structure 22, espacés selon la direction Z. Cela permet d'assurer la reprise des efforts selon la direction orthogonale à la direction 28a, dans un plan XZ. En d'autres termes, ces éléments 92 permettent également la reprise des efforts dans le plan médian d'ouverture ou dans un plan parallèle à celui-ci, et plus préférentiellement la reprise des efforts dans la direction X.

Ici, les éléments de blocage 90, 92 sont placés sur la face arrière 42' et la face supérieure 44', afin de plaquer la face avant 52' contre la face avant 42' de l'encadrement, et afin de plaquer la face inférieure 56' contre la face inférieure 46' de l'encadrement. Alternativement, il pourrait être possible de placer les éléments de blocage 90, 92 autrement que sur les faces arrière 42' et supérieure 44' de l'encadrement. Il est effectivement de préférence recherché à plaquer cette demi-structure 22 sur deux faces jointives de l'encadrement, qui pourraient donc, selon une alternative parmi d'autres, être les faces arrière 42' et supérieure 44', en plaçant les éléments de blocage sollicités en compression sur les faces avant 42' et inférieure 46'.

Chaque élément de blocage 90, 92, ou rangée d'éléments, est de préférence prévu pour former une attache souple, à l'aide d'un organe d'amortissement, comme cela sera détaillé ci-après.

Par ailleurs, des organes d'amortissement secondaires 94, 96 sont interposés entre les deux autres faces jointives 42', 46' de la demi-structure de support, et l'encadrement 50. Les organes d'amortissement secondaires font qu'il n'existe pas de contact direct entre la structure de support et les encadrements, même si de tels contacts directs pourraient être envisagés. Lorsque de tels organes d'amortissement et organes d'amortissement secondaires ne sont pas prévus, il est alors obtenu un assemblage dit rigide entre la structure de support et les encadrements.

Néanmoins, comme cela est le cas dans le mode représenté, chaque élément de blocage est en appui sur ladite structure de support et/ou sur son encadrement associé, via un organe d'amortissement. Cela permet avantageusement de procurer, comme mentionné ci-dessus, une certaine souplesse aux premiers et seconds moyens d'attache, réduisant les vibrations dans le fuselage. En d'autres termes, les organes d'amortissement, préférentiellement en matériau polymère à déformation élastique, par exemple du type en élastomère ou caoutchouc, permettent avantageusement d'amortir les vibrations, et participent donc à isoler, d'un point de vue vibratoire, le fuselage vis-à-vis du moteur. Ici encore, alternativement, d'autres organes d'amortissement du type ressort peuvent être employés.

La figure 5 montre une réalisation possible pour chacun des éléments de blocage 90, 92, intégrant un tel élément amortisseur.

Sur cette figure, on peut voir que l'élément de blocage 90 comprend un organe en forme d'une tige 98 orientée sensiblement orthogonalement aux faces 44', 54' qu'elle relie. L'extrémité de cette tige 98 coopérant avec la face 54' de la demi-structure est en appui dans un logement 100 prévu sur cette face. Cette extrémité formant première surface d'appui 101 peut être bombée et de forme complémentaire de celle du logement 100, pour un meilleur maintien de l'appui. Sur la face supérieure 44' de la traverse 44, il est prévu un logement 102 recevant l'organe d'amortissement 104, en forme par exemple de bloc élastomère. Le fond du logement 102 est constitué par un écrou amovible 106 autorisant le remplacement du bloc élastomère 104 sans avoir à retirer la tige 98, qui elle traverse chacun des éléments 104, 106 comme montré sur la figure 5.

Afin d'appliquer un effort de compression dans la tige, celle-ci présente une autre surface d'appui 108 en contact avec le bloc élastomère 104, et plus précisément avec la face de ce bloc qui est opposée à la face reposant dans le fond du logement 102. Cette surface d'appui 108, opposée à la première surface d'appui 101, peut être prévue sur un organe de serrage 110 monté vissé sur une portion filetée 112 de la tige 98. Cela permet avantageusement de constituer des moyens de réglage de l'écartement entre les deux surfaces d'appui 101, 108, respectivement en appui sur la structure de support et sur l'encadrement. Cette fonctionnalité permet non seulement de faciliter la mise en place de l'élément de blocage 90 dans l'ouverture, mais également de lui appliquer une précontrainte en compression d'une valeur souhaitée, en vissant l'organe de serrage 110.

Par ailleurs, il est de préférence fait en sorte que l'organe d'amortissement 104 puisse se comprimer seulement sur une course d'écrasement C limitée, au-delà de laquelle un contact rigide entre la structure et l'encadrement interdit la poursuite de l'écrasement. Ce contact est par exemple obtenu par la mise en butée de la surface d'appui 108 contre la surface 114 délimitant l'ouverture du logement 102 recevant le bloc élastomère 104.

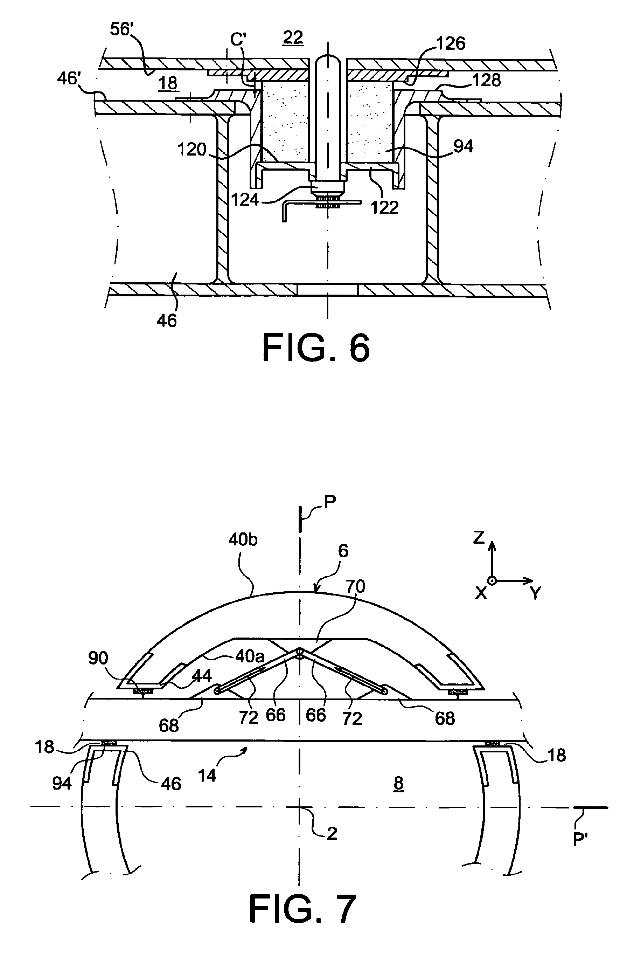

La figure 6 montre une réalisation possible pour chacune des liaisons intégrant un organe d'amortisseur secondaire 94, 96.

Sur cette figure, on peut voir que sur la face inférieure 46' de la traverse 46, il est prévu un logement 120 recevant l'organe d'amortissement secondaire 94, en forme par exemple de bloc élastomère. Le fond du logement 120 est constitué par un écrou amovible 122 autorisant un remplacement aisé du bloc élastomère 94, par exemple en dévissant l'écrou grâce à un axe 124 lui étant solidaire.

Le bloc 94 est donc en appui dans le fond du logement 120, ainsi qu'en appui sur une surface dédiée 126 de la face 56'. Il est de ce fait comprimé entre ces deux appuis.

Par ailleurs, il est de préférence fait en sorte que l'organe d'amortissement secondaire 94 puisse se comprimer seulement sur une course d'écrasement C' limitée, au-delà de laquelle un contact rigide entre la structure et l'encadrement interdit la poursuite de l'écrasement. Ce contact est par exemple obtenu par la mise en butée de la surface 126 contre la surface 128 délimitant l'ouverture du logement 120 recevant le bloc élastomère 94.

Par conséquent, on en déduit que les premiers moyens d'attache assurant le montage de la demi-structure 22 dans l'encadrement 50 sont exclusivement des éléments sollicités en compression.

En référence à nouveau à la figure 3, on peut voir que les premiers et seconds moyens d'attache sont de préférence complétés par la présence d'une ou plusieurs bielles de reprise d'efforts. Cela permet globalement de minimiser l'intensité des efforts transitant par les encadrements d'ouvertures 50, permettant à ces derniers de présenter un dimensionnement moins conséquent que celui rencontré antérieurement.

Dans le mode représenté, il est prévu deux bielles 66 disposées symétriquement par rapport au plan P, chacune de ces bielles présentant une première extrémité, ou extrémité basse, montée sur la demi-structure de support 22, et dont l'extrémité opposée, ou extrémité haute, est montée sur le fuselage à distance des ouvertures 18.

En raison de la symétrie adoptée, seule la bielle 66 de gauche sur la figure 3, à savoir celle qui complète les premiers moyens d'attache, va être décrite.

Pour minimiser la concentration de contraintes au sein de la demi-structure de support 22, au droit de l'ouverture 18, il est préférentiellement fait en sorte que la première extrémité de bielle soit également montée sur cette structure de support à distance des ouvertures, de préférence donc au sein de l'espace intérieur 8. Cette première extrémité est de préférence montée articulée sur la demi-structure 22, par exemple à l'aide d'une ferrure 68 solidaire de cette dernière.

Elle s'étend ensuite en se rapprochant du plan vertical médian P, dans lequel son extrémité opposée est montée sur le fuselage, de préférence sur une portion supérieure de celui-ci comme cela a été représenté. Ici encore, la liaison est de préférence du type articulé, à l'aide d'une ferrure 70 ou extension de cadre de fuselage faisant saillie en direction de l'espace intérieur.

Les deux bielles de reprise d'efforts, qui sont de préférence agencées dans un plan transversal et dont les extrémités opposées sont montées sensiblement en un même point du plan P sur le fuselage, forment ensemble sensiblement un V renversé par rapport à celui de la structure de support 14.

Néanmoins, la position et l'orientation des bielles pourraient être modifiées en fonction des besoins rencontrés. A cet égard, les bielles pourraient être agencées au-dessous de la structure 14, et non au-dessus comme représenté.

D'une façon générale, il est tout de même fait de préférence en sorte que chaque bielle de reprise d'efforts 66 soit inclinée par rapport à la direction Z, en vue selon la direction X telle que celle de la figure 3. Cela lui permet de transférer des efforts selon une direction dont une composante au moins est orientée selon la direction Y, ces efforts transversaux s'avérant en effet les plus difficiles à reprendre avec les premiers moyens d'attache logés dans l'ouverture de fuselage 18.

Dans le mode représenté, chaque bielle 66 est sensiblement inclinée par rapport aux directions Y et Z, de manière à s'élever en allant vers l'intérieur. Les efforts s'exerçant selon ces deux directions de bielles, schématisés par les deux flèches 72 de la figure 3, peuvent donc être parfaitement repris par les moyens d'attache. Néanmoins, une solution alternative, parmi d'autres, aurait pu être d'orienter chaque bielle 66 selon la direction Y, sans sortir du cadre de l'invention.

Plusieurs bielles 66 telles que celles montrées sur la figure 3 peuvent être prévues entre la structure de support 14 et le fuselage 6, leur nombre n'étant donc pas limité à un ou deux. En outre, l'une ou plusieurs d'entre elles peuvent chacune être remplacée par un vérin amortisseur (non représenté), capable d'amortir / de filtrer les vibrations susceptibles d'être transmises au fuselage.

Toujours dans ce même but d'amortir / de filtrer les vibrations susceptibles d'être transmises par les bielles 66 au fuselage, il est possible d'équiper au moins l'une d'entre elles d'un résonateur, dont un exemple est montré sur la figure 3a. Sur cette figure, le résonateur équipe l'extrémité de la bielle qui est raccordée à la ferrure 70 du fuselage 6. Le résonateur 150, s'étendant verticalement, comporte un batteur 152 raccordé à cette extrémité de bielle par l'une de ses extrémités, tandis que son autre extrémité porte une masse 154. L'amortissement des vibrations transmises au fuselage par la bielle s'effectue par un mouvement oscillatoire de la masse 154 autour de l'axe d'articulation de la bielle sur la ferrure 70 du fuselage, à savoir l'axe d'articulation du batteur sur la ferrure 70, comme montré schématiquement par la flèche 156 de la figure 3a.

En outre, comme mentionné ci-dessus, la disposition des bielles 66 peut être adaptée en fonction des besoins et contraintes rencontrés. Sur la figure 3b, les deux bielles 66 disposent chacune d'une extrémité extérieure (non représentée) rapportée de manière préférentiellement articulée sur le fuselage, de préférence en partie latérale de celui-ci, et d'une extrémité intérieure rapportée de manière articulée sur un palonnier 158, lui-même articulé sur la structure de support 14, de préférence en son milieu. Ainsi, les extrémités intérieures des deux bielles 66 étant raccordées de part et d'autre de l'axe d'articulation 160 du palonnier, de préférence orienté selon la direction X, les efforts introduits par chacune des bielles 66 peuvent donc être équilibrés. En outre, cette adjonction d'un palonnier facilite grandement le montage, étant donné qu'il élimine le degré d'hyperstatisme amené par la configuration à deux bielles. Bien que cela ne soit pas limitatif, la figure 3b montre une configuration dans laquelle le V formé par les deux bielles 66 est ouvert vers le bas, et agencé globalement en-dessous de la structure de support 14.

Alternativement, le palonnier 158 reliant les deux extrémités de bielles pourrait être articulé sur le fuselage et non la structure de support, par exemple sur la ferrure de fuselage 70 décrite en relation avec la figure 3.

En référence à la figure 7, on peut voir un mode de réalisation dans lequel les moyens d'attache décrits précédemment sont conservés, seule la structure de support des moteurs 14 présentant une conception différente. En effet, celle-ci n'est plus réalisée en deux demi-structures rapportées l'une sur l'autre, mais en une seule structure, de préférence rectiligne et transversale, traversant les deux ouvertures 18, 18. Il est noté que ce type de structure peut être employé quelque soit la nature des moyens d'attache retenue.

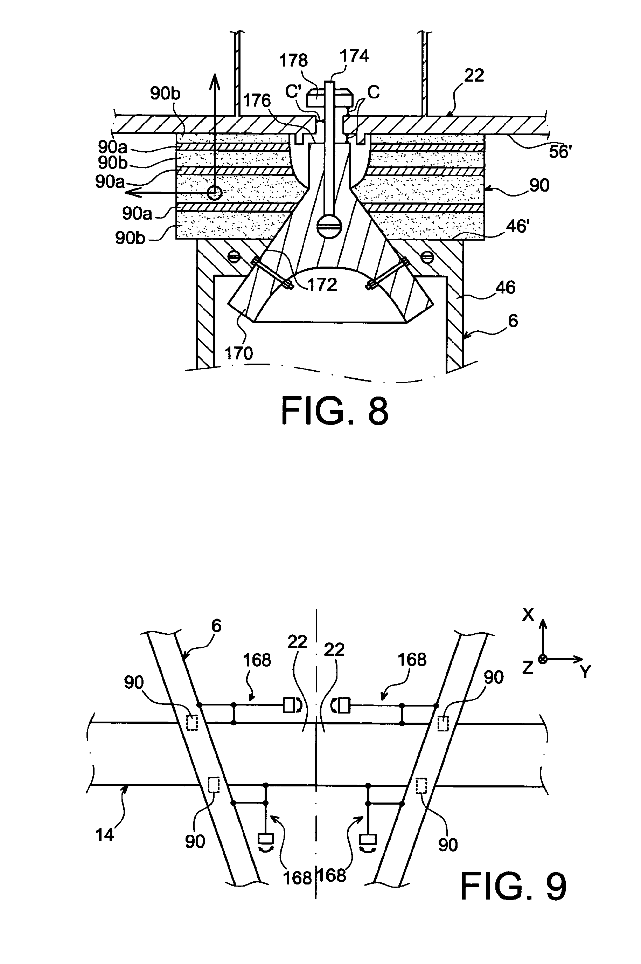

Sur la figure 8, on peut voir un élément de blocage 90 selon un autre mode de réalisation préféré, destiné à équiper les premiers et seconds moyens d'attache, et en particulier à être interposé entre la face inférieure 56' de la demi-structure 22, et la face inférieure 46' de la traverse inférieure de fermeture 46 l'encadrement.

Contrairement à la réalisation précédente, cet organe 90 ne prend pas la forme d'une tige en appui contre un organe d'amortissement, mais prend la forme d'un bloc amortisseur, de préférence sensiblement parallélépipédique, du type bloc lamifié en élastomère ou caoutchouc. Ainsi, des lames ou plaques 90a, de préférence métalliques, alternent avec des couches 90b d'élastomère ou de caoutchouc, formant ensemble un empilement situé entre les deux faces 46', 56'. D'ailleurs, il est préférentiellement fait en sorte que les éléments du bloc 90 qui contactent les deux faces 46', 56' soient des couches 90b d'élastomère ou de caoutchouc.

L'avantage d'une telle configuration réside dans le fait que chaque élément de blocage 90 ainsi constitué est capable de transmettre des efforts dans les trois directions orthogonales, à savoir dans la direction d'empilement et dans les deux directions orthogonales entre elles ainsi qu'à cette même direction d'empilement, correspondant à la direction de la hauteur de l'ouverture. Cela permet par exemple de ne plus nécessiter la présence des bielles de reprise d'efforts précitées.

Plus encore, cette particularité de reprise des efforts dans les trois directions par chaque élément de blocage 90 en forme de bloc lamifié en élastomère ou caoutchouc, permet de limiter le nombre de ces organes pour former les premiers et seconds moyens d'attache.

Par exemple, il devient possible de constituer chacun des premiers et seconds moyens d'attache avec seulement un ou plusieurs éléments 90 agencés uniquement entre les deux faces 46', 56', ces éléments 90 en forme de blocs lamifiés servant alors de support à l'ensemble formé par la structure 14 portant les moteurs 10. Dans ce cas de figure, les autres faces 42', 42' et 44' de l'ouverture de fuselage sont dépourvues d'éléments d'attache.

Un tel exemple de réalisation est montré sur la figure 9, dans lequel seuls deux éléments de blocage 90 en forme de blocs lamifiés sont prévus entre chaque demi-structure 22 et leur ouverture de fuselage associée, en étant espacés l'un de l'autre selon la direction X, et placés sous la demi-structure 22 qu'ils supportent. La souplesse de chaque élément 90, dans chacune des trois directions, peut être adaptée en fonction des besoins rencontrés, en particulier en termes de filtration / amortissement des vibrations. On peut par exemple prévoir une faible souplesse dans la direction d'empilement du bloc 90, et une plus grande souplesse dans les deux autres directions orthogonales.

Toujours à des fins d'amortissement / de filtration des vibrations, il peut par ailleurs être adjoint des résonateurs 168 entre la structure 14 et le fuselage 6, équipant par exemple chacun des quatre éléments de blocage 90. Sur la figure 9, les deux résonateurs 168 les plus avant sont prévus pour filtrer les vibrations selon la direction X, tandis que les deux résonateurs 168 les plus arrière sont prévus pour filtrer les vibrations selon la direction Y.

De retour à la figure 8, l'élément de blocage 90 est préférentiellement équipé de moyens tels qu'il puisse se comprimer selon la direction d'empilement seulement sur une course d'écrasement limitée, au-delà de laquelle un contact rigide entre la structure et l'encadrement interdit la poursuite de l'écrasement.

Pour ce faire, il est prévu une ferrure 170 de forme triangulaire s'élargissant vers le bas, fixée de manière démontable sur la traverse 46, dans un orifice 172 de celle-ci. Cette ferrure 170 porte un axe 174 s'étendant vers le haut et traversant avec un jeu radial C' la face 56' de la demi-structure 22. De même, un jeu vertical C est prévu entre la face 56' et l'extrémité haute 176 de la ferrure 170 formant butée, de même qu'un autre jeu vertical C est prévu entre un écrou 178 monté à l'extrémité de l'axe 174, et la face opposée à la face 56' de la demi-structure 22.

Ainsi, l'élément de blocage 90 peut se comprimer verticalement seulement sur une course d'écrasement C limitée, au-delà de laquelle un contact rigide entre la structure et l'encadrement, et plus précisément entre la butée 176 et la face 56', interdit la poursuite de l'écrasement. De la même manière, une décompression de l'élément de blocage 90 est possible sur une course C, au-delà de laquelle la décompression est stoppée par l'entrée en contact de l'écrou 178 contre la surface en regard de la demi-structure 22.

Un tel principe s'applique également pour les déformations dans les deux autres directions. En effet, lorsque le jeu radial C' est consommé, l'axe 174 vient au contact de l'orifice qu'il traverse, pratiqué dans la demi-structure 22.

Ainsi, la ferrure 170, l'axe 174 et l'écrou 178 forment ensemble un dispositif de reprise des efforts dit « en attente », n'étant sollicité qu'à partir d'un certain niveau de déformation de l'élément de blocage 90, lorsque le ou les jeux C, C' ont été consommés. Il est recherché à ce que ces jeux ne soient pas consommés durant des conditions normales de vol, mais éventuellement seulement lorsque de fortes charges statiques sont appliquées, par exemple susceptibles d'être rencontrées en cas de turbulences.

Enfin, il est indiqué que la conception particulière de ce dispositif en attente fait qu'il peut aisément être démonté, en le déplaçant de haut en bas, afin éventuellement de remplacer l'élément de blocage 90, ou de procéder à son inspection.

## Revendications

1. Partie arrière d'aéronef (1) comprenant :
- un fuselage (6) délimitant un espace intérieur (8) de l'aéronef ;
- au moins deux moteurs (10) ;
- une structure de support des moteurs (14), traversant ledit fuselage au niveau d'une première et d'une seconde ouvertures (18, 18) pratiquées dans celui-ci et réparties de part et d'autre d'un plan médian vertical (P) de l'aéronef, ladite structure de support présentant une première et une seconde extrémités opposées (20, 20) ;
- chacune desdites première et seconde extrémités opposées de la structure de support faisant saillie extérieurement du fuselage, respectivement de part et d'autre dudit plan médian vertical, et portant l'un desdits moteurs ; et
- des moyens d'attache raccordant ladite structure de support (14) au fuselage (6), comprenant des premiers moyens d'attache raccordant ladite structure (14) à un premier encadrement (50) formant ladite première ouverture de fuselage (18) et des seconds moyens d'attache raccordant ladite structure (14) à un second encadrement (50) formant ladite seconde ouverture de fuselage (18) ;
**caractérisée en ce que**
lesdits premiers moyens d'attache comprennent au moins un élément de blocage (90, 92) de ladite structure de support, sollicité en compression en étant en appui d'une part sur ledit premier encadrement (50), et d'autre part sur ladite structure de support (14), et **en ce que** lesdits seconds moyens d'attache comprennent au moins un élément de blocage (90, 92) de ladite structure de support, sollicité en compression en étant en appui d'une part sur ledit second encadrement (50), et d'autre part sur ladite structure de support (14).

2. Partie arrière d'aéronef selon la revendication 1, **caractérisée en ce que** chacun desdits premiers et seconds moyens d'attache comprend au moins deux éléments de blocage (90, 92) de ladite structure de support, sollicités en compression respectivement selon deux directions distinctes.

3. Partie arrière d'aéronef selon la revendication 1 ou la revendication 2, **caractérisée en ce que** chaque élément de blocage (90, 92), sollicité en compression, est en appui sur ladite structure de support et/ou sur son encadrement associé, via un organe d'amortissement (104).

4. Partie arrière d'aéronef selon la revendication 3, **caractérisée en ce que** ledit organe d'amortissement (104) est en matériau polymère à déformation élastique.

5. Partie arrière d'aéronef selon l'une quelconque des revendications précédentes, **caractérisée en ce que** chaque élément de blocage (90, 92) présente des moyens de réglage de l'écartement entre ses deux surfaces d'appui (101, 108) respectivement en appui sur la structure de support (14) et sur l'encadrement concerné (50).

6. Partie arrière d'aéronef selon l'une quelconque des revendications précédentes, **caractérisée en ce que** chaque élément de blocage (90, 92) prend la forme d'une tige de compression portant deux surfaces d'appui opposées (101, 108).

7. Partie arrière d'aéronef selon l'une quelconque des revendications précédentes, **caractérisée en ce que** chacun desdits premiers et seconds moyens d'attache comprend des éléments de blocage (90, 92) en appui sur au moins deux faces de ladite structure de support, ainsi qu'au moins un organe d'amortissement secondaire (94, 96) interposé entre une autre face de ladite structure de support, et ledit encadrement concerné.

8. Partie arrière d'aéronef selon l'une quelconque des revendications précédentes, **caractérisée en ce que** ladite structure de support (14) et lesdits premier et second encadrements (50, 50) présentent chacun quatre faces formant sensiblement un quadrilatère en section selon le plan médian d'ouverture associé, et **en ce que** chacun desdits premiers et seconds moyens d'attache comprend des éléments de blocage (90, 92) en appui sur deux faces jointives de ladite structure de support (14), ainsi que des organes d'amortissement secondaires (94, 96) interposés entre les deux autres faces jointives de ladite structure de support, et ledit encadrement concerné.

9. Partie arrière d'aéronef selon l'une quelconque des revendications précédentes, **caractérisée en ce que** lesdits moyens d'attache comprennent également au moins une bielle de reprise d'efforts (66) dont une première extrémité est montée sur ladite structure de support (14), et dont l'extrémité opposée est montée sur le fuselage (6), à distance des première et seconde ouvertures (18, 18).

10. Partie arrière d'aéronef selon la revendication 9, **caractérisée en ce que** ladite bielle de reprise d'efforts (66) est inclinée par rapport à une direction verticale (Z) de l'aéronef, en vue selon une direction longitudinale (X) de ce dernier.

## Claims

1. A rear part of an aircraft (1) comprising:
- a fuselage (6) delimiting an inner area (8) of the aircraft;
- at least two engines (10);
- a support structure for the engines (14), passing through said fuselage at first and second openings (18, 18) formed therein and distributed on either side of a vertical middle plane (P) of the aircraft, said support structure having first and second opposite ends (20, 20);
- each of said first and second opposite ends of the support structure protruding outwardly from the fuselage, on either side of said vertical middle plane, respectively, and supporting one of said engines; and
- fastening means connecting said support structure (14) to the fuselage (6), comprising first fastening means connecting said structure (14) to a first casing (50) forming said first fuselage opening (18) and second fastening means connecting said structure (14) to a second casing (50) forming said second fuselage opening (18);
**characterized in that**
said first fastening means comprise at least one blocking element (90, 92) of said support structure, under compression loading while bearing on one hand on said first casing (50), and on the other hand on said support structure (14), and **in that** said second fastening means comprise at least one locking element (90, 92) of said support structure, under compression loading while bearing on one hand on said second casing (50), and the other hand on said support structure (14).

2. The rear part of an aircraft according to claim 1, **characterized in that** each of said first and second fastening means comprises at least two blocking elements (90, 92) of said support structure, under compression loading along two separate directions, respectively.

3. The rear part of an aircraft according to claim 1 or claim 2, **characterized in that** each blocking element (90, 92), under compression loading, bears on said support structure and/or on its associated casing, via a damping member (104).

4. The rear part of an aircraft according to claim 3, **characterized in that** said damping member (104) is made from an elastically deformable polymer material.

5. The rear part of an aircraft according to any one of the preceding claims, **characterized in that** each blocking element (90, 92) has means for adjusting the spacing between its two bearing surfaces (101, 108) respectively bearing on the support structure (14) and on the concerned casing (50).

6. The rear part of an aircraft according to any one of the preceding claims, **characterized in that** each blocking element (90, 92) assumes the form of a compression rod supporting two opposite bearing surfaces (101, 108).

7. The rear part of an aircraft according to any one of the preceding claims, **characterized in that** each of said first and second fastening means comprises blocking elements (90, 92) bearing on at least two faces of said support structure, as well as at least one secondary damping member (94, 96) inserted between another face of said support structure, and said concerned secondary casing.

8. The rear part of an aircraft according to any one of the preceding claims, **characterized in that** said support structure (14) and said first and second casings (50, 50) each have four faces substantially forming a quadrilateral in section along the associated middle opening plane, and **in that** each of said first and second fastening means comprises blocking elements (90, 92) bearing on two attached faces of said support structure (14), as well as secondary damping members (94, 96) inserted between the other two attached faces of said support structure, and said concerned casing.

9. The rear part of an aircraft according to any one of the preceding claims, **characterized in that** said fastening means also comprise at least one effort recovery connecting rod (66) whereof a first end is mounted on said support structure (14), and the opposite end of which is mounted on the fuselage (6), spaced away from the first and second openings (18, 18).

10. The rear part of an aircraft according to claim 9, **characterized in that** said effort recovery connecting rod (66) is inclined relative to a vertical direction (Z) of the aircraft, seen along a longitudinal direction (X) thereof.

## Patentansprüche

1. Heckteil eines Luftfahrzeugs (1), umfassend:
- einen Rumpf (6), der einen Innenraum (8) des Luftfahrzeugs begrenzt;
- mindestens zwei Triebwerke (10);
- eine Trägerstruktur für Triebwerke (14), die durch den Rumpf auf der Höhe einer ersten und einer zweiten Öffnung (18, 18), die in diesem ausgeführt sind und sich auf der einen bzw. der anderen Seite einer vertikalen Mittelebene (P) des Luftfahrzeugs befinden, hindurchgeht, wobei die Trägerstruktur ein erstes und ein zweites Ende, die einander entgegensetzt sind, (20, 20) aufweist;
- wobei das erste und das zweite Ende der Trägerstruktur, die einander entgegengesetzt sind, aus dem Rumpf außen jeweils auf der einen bzw. der anderen Seite der vertikalen Mittelebene herausstehen und eines der Triebwerke tragen; und
- Aufhängemittel, die die Trägerstruktur (14) mit dem Rumpf (6) verbinden, die erste Aufhängemittel, die die Struktur (14) mit einem die erste Rumpföffnung (18) bildenden ersten Rahmen (50) verbinden, und zweite Aufhängemittel, die die Struktur (14) mit einem die zweite Rumpföffnung (18) bildenden zweiten Rahmen (50) verbinden, umfassen;
**dadurch gekennzeichnet, dass** die ersten Aufhängemittel mindestens ein Feststellelement (90, 92) für die Trägerstruktur umfassen, das sich, unter Druck stehend, einerseits an dem ersten Rahmen (50) und andererseits an der Trägerstruktur (14) abstützt, und dass die zweiten Aufhängemittel mindestens ein Feststellelement (90, 92) für die Trägerstruktur umfassen, das sich, unter Druck stehend, einerseits an dem zweiten Rahmen (50) und andererseits an der Trägerstruktur (14) abstützt.

2. Heckteil eines Luftfahrzeugs nach Anspruch 1, **dadurch gekennzeichnet, dass** die ersten und die zweiten Aufhängemittel jeweils mindestens zwei Feststellmittel (90, 92) für die Trägerstruktur umfassen, die jeweils in zwei verschiedenen Richtungen unter Druck stehen.

3. Heckteil eines Luftfahrzeugs nach Anspruch 1 oder Anspruch 2, dadurch gekenntzeichnet, dass sich jedes Feststellelement (90, 92), unter Druck stehend, an der Trägerstruktur und/oder dem mit dieser verbundenen Rahmen über ein Dämpfungsorgan (104) abstützt.

4. Heckteil eines Luftfahrzeugs nach Anspruch 3, **dadurch gekennzeichnet, dass** das Dämpfungsorgan (104) aus einem Polymermaterial mit elastischer Verformung besteht.

5. Heckteil eines Luftfahrzeugs nach einem der vorhergehenden Ansprüche, **dadurch gekennzeichnet, dass** jedes Feststellelement (90, 92) Mittel zur Regelung des Abstands zwischen dessen beiden Abstützflächen (101, 108), die sich jeweils an der Trägerstruktur (14) bzw. dem betreffenden Rahmen (50) abstützen, aufweist.

6. Heckteil eines Luftfahrzeugs nach einem der vorhergehenden Ansprüche, **dadurch gekennzeichnet, dass** jedes Feststellelement (90, 92) die Form eines Druckbolzens aufweist, der zwei einander entgegengesetzte Abstützflächen (101, 108) aufweist.

7. Heckteil eines Luftfahrzeugs nach einem der vorhergehenden Ansprüche, **dadurch gekennzeichnet, dass** die ersten und die zweiten Aufhängemittel jeweils Feststellelemente (90, 92), die sich an mindestens zwei Flächen der Trägerstruktur abstützen, sowie mindestens ein sekundäres Dämpfungsorgan (94, 96), das zwischen eine andere Fläche der Trägerstruktur und den betreffenden Rahmen eingefügt ist, umfassen.

8. Heckteil eines Luftfahrzeugs nach einem der vorhergehenden Ansprüche, **dadurch gekennzeichnet, dass** die Trägerstruktur (14) und der erste und der zweite Rahmen (50, 50) jeweils vier Flächen aufweisen, die im Querschnitt längs der damit verbundenen Mittelebene der Öffnung im Wesentlichen ein Viereck bilden, und dass die ersten und die zweiten Aufhängemittel jeweils Feststellelemente (90, 92), die sich an zwei aneinanderstoßenden Flächen der Trägerstruktur (14) abstützen, sowie sekundäre Dämpfungsorgane (94, 96), die zwischen die zwei anderen aneinanderstoßenden Flächen der Trägerstruktur und den entsprechenden Rahmen eingefügt sind, umfassen.

9. Heckteil eines Luftfahrzeugs nach einem der vorhergehenden Ansprüche, **dadurch gekennzeichnet, dass** die Aufhängemittel auch mindestens eine Stange zur Aufnahme von Kräften (66) umfassen, von der ein erstes Ende an der Trägerstruktur (14) angebracht ist und das entgegengesetzte Ende an dem Rumpf (6) in einem Abstand zur ersten und zweiten Öffnung (18, 18) angebracht ist.

10. Heckteil eines Luftfahrzeugs nach Anspruch 9, **dadurch gekennzeichnet, dass** die Stange zur Aufnahme von Kräften (66) in Bezug auf einer Vertikalenrichtung (Z) des Luftfahrzeugs mit Blick auf eine Längsrichtung (X) dieses Letzteren geneigt ist.
